(19) **Europäisches Patentamt / European Patent Office / Office européen des brevets**

(11) **EP 4 742 075 A1**

(12) # EUROPEAN PATENT APPLICATION

(43) Date of publication:
**13.05.2026 Bulletin 2026/20**

(21) Application number: **25203766.8**

(22) Date of filing: **22.09.2025**

(51) International Patent Classification (IPC):
**G06F 30/17** (2020.01)    **G06F 30/27** (2020.01)
**G06F 111/14** (2020.01)    **G06F 119/18** (2020.01)

(52) Cooperative Patent Classification (CPC):
**G06F 30/17; G06F 30/27;** G06F 2111/14;
G06F 2119/18

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **08.11.2024 IN 202421085898**

(71) Applicant: **Tata Consultancy Services Limited Mumbai, Maharashtra 400 021 (IN)**

(72) Inventors:
- **BANDYOPADHYAY, Soma**
  **700135 Kolkata, West Bengal (IN)**

- **CHATTERJEE, Subhasri**
  **700135 Kolkata, West Bengal (IN)**
- **DATTA, Anish**
  **700135 Kolkata, West Bengal (IN)**
- **CHAKRAVARTY, Tapas**
  **700135 Kolkata, West Bengal (IN)**
- **PAL, Arpan**
  **700135 Kolkata, West Bengal (IN)**

(74) Representative: **Goddar, Heinz J.**
**Boehmert & Boehmert**
**Anwaltspartnerschaft mbB**
**Pettenkoferstrasse 22**
**80336 München (DE)**

(54) **METHOD AND SYSTEM FOR A GENERATIVE ARTIFICIAL INTELLIGENCE BASED SENSOR DESIGN SYNTHESIS OF METAMATERIAL**

(57)    The embodiments of the present disclosure herein address unresolved problems of unavailability of a scalable framework to enable large spectrum of optical response-design combination with reduced computing time. Further, there are limitations in the choice of features to obtain the desired sensitivity. Embodiments herein provide a method and system for a generative artificial intelligence (GenAI) based sensor design synthesis of metamaterial. Herein, the sensor design synthesis framework is based on deep generative models. The GenAI based design synthesis model would provide that unknown information that would immensely be useful for optimizing the design towards the highest sensitivity, addressing the limitations in the choice of features using numerical simulator and easiest fabrication-feasibility following sensitivity response (SenR). The SenR is the sensitivity relationship between the physical properties of the ambient medium and the property of the sensor.

300

Receiving, via an input/output (I/O) interface, one or more geometrical structures with a plurality of geometric design parameters, and one or more optical responses as a target sensor response to synthesize a metamaterial sensor design using a generative artificial intelligence (GenAI) model (302)

Generating, via one or more hardware processors, a set of optical response conditioned on the received one or more geometrical structures in a forward path learning technique using a conditional variational auto-encoder, wherein the conditional variational auto-encoder is conditioned by the received one or more geometrical structure along with sensitivity relationship (SenR) (304)

Generating, via the one or more hardware processors, a geometrical structure of the metamaterial from the set of optical response in an inverse path learning technique using the conditional variational auto-encoder, wherein the conditional variational auto-encoder is conditioned on optical response along with the sensitivity relationship (SenR) and with one or more domain adaptable features (306)

**FIG. 3**

**Description**

CROSS-REFERENCE TO RELATED APPLICATIONS AND PRIORITY

The present application claims priority to Indian application no. 202421085898, filed on November 08, 2024.

TECHNICAL FIELD

The disclosure herein generally relates to the field of sensor design synthesis, and more particularly, a method and system for a Generative Artificial Intelligence (GenAI) based sensor design synthesis of metamaterial.

BACKGROUND

Plasmonic metamaterial sensor offers a promising approach to the detection of nano plastic particles due to their high sensitivity and compatibility with nanoscale analytes. When nano plastic particles interact with the sensor surface, they induce changes in the refractive index, leading to shifts in the plasmonic resonance wavelength or angle. These changes can be monitored in real time, providing quantitative information about the presence and concentration of nano plastic particles in the sample. Furthermore, the nanoscale dimensions of plastic particles are well-suited to the sensitivity and spatial resolution capabilities of plasmonic sensor, enabling the detection of individual nanoparticles. By optimizing the design and fabrication of plasmonic metamaterial sensor, it is likely to develop highly sensitive platforms for the detection of nano plastic pollution in environmental samples. This could contribute to efforts aimed at understanding and mitigating the environmental impact of nano plastic contamination in aquatic ecosystems.

Traditional design systems and methods often require manual manipulations, which is time-consuming and resource intensive. The integration of Artificial Intelligence (AI) in optimizing metamaterial design can be employed to explore variant disciplines and address bottlenecks in design. AI-based metamaterial design can also enable the development of novel metamaterials by optimizing design parameters that cannot be achieved using traditional methods. The application of AI can be leveraged to accelerate the analysis of vast data sets as well as to better utilize limited data sets via generative models.

Generative models such as Generative Adversarial Networks (GANs) and Variational Autoencoders (VAEs) play important role in the generation of novel metamaterial designs by capturing the intrinsic patterns of the sensor response and its associated geometrical structure along with the material property and other physical characteristics of ambient environment with a learned latent space and patterns to present novel metamaterial configurations with tuned and desired functionality.

However, there is unavailability of a scalable framework to enable large spectrum of optical response-design combination with reduced computing time. Further, there are limitations in the choice of features to obtain the desired sensitivity. Numerical simulators are unable to generate structure/geometry with optical response as in input. There is unavailability of desired design for nano-plastic sensors and unavailability of mode of detection through a wide refractive index range.

SUMMARY

Embodiments of the present disclosure present technological improvements as solutions to one or more of the above-mentioned technical problems recognized by the inventors in conventional systems. For example, in one embodiment, a method for a Generative Artificial Intelligence (GenAI) based sensor design synthesis of metamaterial is provided. The processor-implemented method includes receiving, via an input/output (I/O) interface, one or more geometrical structures with a plurality of geometric design parameters, and one or more optical response as a target sensor response corresponding to each of the one or more geometrical structures to synthesize a metamaterial sensor design using the GenAI model.

Further, the processor-implemented method includes generating, via one or more hardware processors, a set of optical response conditioned on the received one or more geometrical structures in a forward path learning technique using a conditional variational auto-encoder, wherein the conditional variational auto-encoder is conditioned by the received one or more geometrical structure along with sensitivity relationship (SenR) and generating, via the one or more hardware processors, a geometrical structure of the metamaterial from the set of optical response in an inverse path learning technique using the conditional variational auto-encoder, wherein the conditional variational auto-encoder is conditioned on optical response along with the sensitivity relationship (SenR) and with one or more domain adaptable features.

In another embodiment, a system for a generative artificial intelligence (GenAI) based sensor design synthesis of metamaterial is provided. The system comprises a memory storing a plurality of instructions, one or more Input/Output (I/O) interfaces, and one or more hardware processors coupled to the memory via the one or more I/O interfaces. The one or more hardware processors are configured by the instructions to receive, via an Input/Output (I/O) interface, one or more geometrical structures with a plurality of geometric design parameters, and one or more optical response as a target sensor response corresponding to each of the one or more geometrical structures to synthesize a metamaterial sensor design using a Generative Artificial Intelligence (GenAI) model.

Further, the one or more hardware processors are configured by the instructions to generate a set of optical response conditioned on the received one or more geometrical structures in a forward path learning technique using a conditional variational auto-encoder. The conditional variational auto-encoder is conditioned by the received one or more geometrical structure along with sensitivity relationship (SenR). Finally, the one or more hardware processors are configured by the instructions generate a geometrical structure of the metamaterial from the set of optical response in an inverse path learning technique using the conditional variational auto-encoder. Herein, the conditional variational auto-encoder is conditioned on optical response along with the sensitivity relationship (SenR) and with one or more domain adaptable features.

In yet another aspect, there are provided one or more non-transitory machine-readable information storage mediums comprising one or more instructions, which when executed by one or more hardware processors causes a method for a Generative Artificial Intelligence (GenAI) based sensor design synthesis of metamaterial. The processor-implemented method includes receiving, via an input/output (I/O) interface, one or more geometrical structures with a plurality of geometric design parameters, and one or more optical response as a target sensor response corresponding to each of the one or more geometrical structures to synthesize a metamaterial sensor design using a generative artificial intelligence (GenAI) model.

Further, the processor-implemented method includes generating, via one or more hardware processors, a set of optical response conditioned on the received one or more geometrical structures in a forward path learning technique using a conditional variational auto-encoder, wherein the conditional variational auto-encoder is conditioned by the received one or more geometrical structure along with sensitivity relationship (SenR) and generating, via the one or more hardware processors, a geometrical structure of the metamaterial from the set of optical response in an inverse path learning technique using the conditional variational auto-encoder, wherein the conditional variational auto-encoder is conditioned on optical response along with the sensitivity relationship (SenR) and with one or more domain adaptable features.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates a block diagram of a system for a generative artificial intelligence (GenAI) based sensor design synthesis of metamaterial, according to some embodiments of the present disclosure.

FIGS. 2A and 2B are functional block diagrams illustrating the system of FIG. 1 for a generative artificial intelligence (GenAI) based sensor design synthesis of metamaterial, according to some embodiments of the present disclosure.

FIG. 3 is an exemplary flow diagram illustrating a processor-implemented method for a generative artificial intelligence (GenAI) based sensor design synthesis of metamaterial, according to some embodiments of the present disclosure.

FIG. 4 is a schematic diagram of the designed plasmonic metamaterial, according to some embodiments of the present disclosure.

FIG. 5 is a schematic diagram to illustrate a top view on the plasmonic nanostructure and the geometrical features, according to some embodiments of the present disclosure.

FIG. 6 is a schematic diagram illustrating the variation in the plasmonic resonance wavelength ($\lambda_{res}$) corresponding to the refractive indices (RI), according to some embodiments of the present disclosure.

FIG. 7 is a schematic diagram to illustrate generated optical response corresponding to an unseen geometrical structure P=0.22 micrometer, according to some embodiments of the present disclosure.

FIG. 8 is a schematic diagram to illustrate generated optical response corresponding to an unseen geometrical structure P=0.24 micrometer, according to some embodiments of the present disclosure.

FIG. 9 is a graphical representation to illustrate relations with the resonance wavelength and refractive index for generated optical response corresponding to unseen geometrical structure, according to some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

A GenAI based sensor design synthesis framework is envisaged to impact industries at large since the goal is to significantly reduce the time-to-market for a new design. Another goal is to generate non-obvious geometrical structures offering exotic light-matter interaction properties. Additionally, the GenAI based model would enable the generation of structure-optical response combinations that are not simulated along with the spectral response for different polarization states of incident light.

Theoretically, plasmonic response and sensitivity of a plasmonic sensor significantly vary with different structural combinations and light polarization states. Whilst all those combinations are almost impossible to numerically evaluate, the GenAI based forward model would provide that unknown information that would immensely be useful for optimizing the design towards the highest sensitivity and easiest fabrication-feasibility. Furthermore, a GenAI based inverse design would provide all possible structures associated with each spectrum which would create a database of all possible.

Embodiments herein provide a method and system for a generative artificial intelligence (GenAI) based sensor design synthesis of metamaterial. Herein, the sensor design synthesis framework is based on deep generative models. It has various features. It considers a limited optical structure of sensor combination as an input obtained from a predefined numerical simulator.

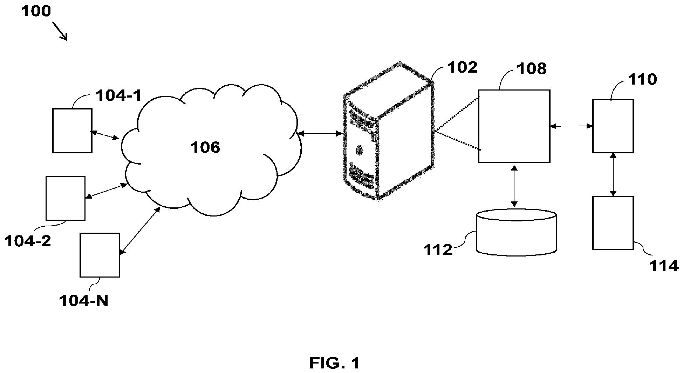

Referring now to the drawings, and more particularly to FIG. 1 through FIG. 9, where similar reference characters denote corresponding features consistently throughout the figures, there are shown preferred embodiments, and these embodiments are described in the context of the following exemplary system and/or method.

FIG. 1 illustrates a block diagram of a system 100 for a generative artificial intelligence (GenAI) based sensor design synthesis of metamaterial, according to some embodiments of the present disclosure. Although the present disclosure is explained considering that the system 100 is implemented on a server, it may be understood that the system 100 may comprise one or more computing devices 102, such as a laptop computer, a desktop computer, a notebook, a workstation, a cloud-based computing environment and the like. It will be understood that the system 100 may be accessed through one or more input/output interfaces 104-1, 104-2... 104-N, collectively referred to as I/O interface 104. Examples of the I/O interface 104 may include, but are not limited to, a user interface, a portable computer, a personal digital assistant, a handheld device, a smartphone, a tablet computer, a workstation, and the like. The I/O interface 104 is communicatively coupled to the system 100 through a network 106.

In an embodiment, the network 106 may be a wireless or a wired network, or a combination thereof. In an example, the network 106 can be implemented as a computer network, as one of the different types of networks, such as virtual private network (VPN), intranet, local area network (LAN), wide area network (WAN), the internet, and such. The network 106 may either be a dedicated network or a shared network, which represents an association of the different types of networks that use a variety of protocols, for example, Hypertext Transfer Protocol (HTTP), Transmission Control Protocol/Internet Protocol (TCP/IP), and Wireless Application Protocol (WAP), to communicate with each other. Further, the network 106 may include a variety of network devices, including routers, bridges, servers, computing devices, storage devices. The network devices within the network 106 may interact with the system 100 through communication links.

The system 100 supports various connectivity options such as BLUETOOTH®, USB, ZigBee, and other cellular services. The network environment enables connection of various components of the system 100 using any communication link including Internet, WAN, MAN, and so on. In an exemplary embodiment, the system 100 is implemented to operate as a stand-alone device. In another embodiment, the system 100 may be implemented to work as a loosely coupled device to a smart computing environment. Further, the system 100 comprises at least one memory 110 with a plurality of instructions, one or more databases 112, and one or more hardware processors 108 which are communicatively coupled with the at least one memory to execute a plurality of modules 114 therein. The components and functionalities of the system 100 are described further in detail.

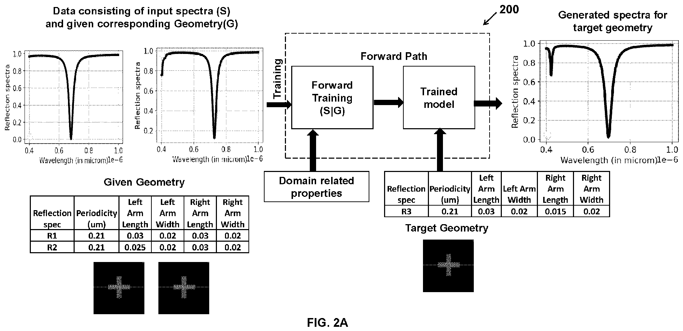

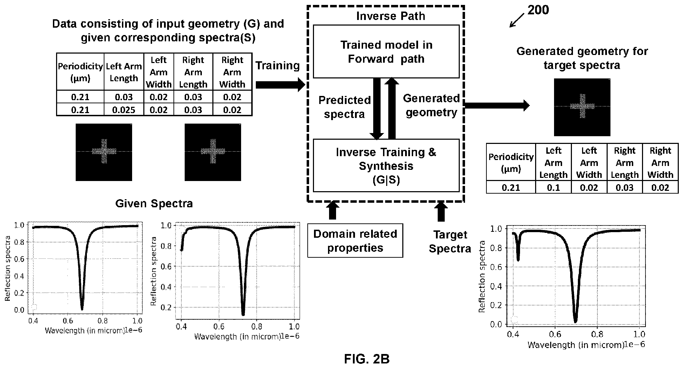

FIGS. 2A and 2B is a functional block diagram 200 to illustrate the system 100 for a generative artificial intelligence (GenAI) based sensor design synthesis of metamaterial, according to some embodiments of the present disclosure. In one embodiment, the system 100 is configured for a generative artificial intelligence (GenAI) based sensor design synthesis of metamaterial. The GenAI based model would enable the generation of sensor structure-optical response combinations those are not simulated along with the sensor response. As an exemplary scenario, for the plasmonic sensor the plasmonic response and detection sensitivity significantly vary with different structural combinations and light polarization states. Further, the GenAI based design synthesis model would provide that unknown information that would immensely be useful for optimizing the design towards the highest sensitivity, addressing the limitations in the choice of features using numerical simulator and easiest fabrication-feasibility following sensitivity response (SenR). The SenR is the sensitivity relationship between the physical properties of the ambient medium and the property of the sensor.

A Deep Learning (DL) based generative model as a sensor design generator is applied for design synthesis of metamaterial. A conditional variational auto-encoder with a conditional prior is employed for data synthesis with forward and invers path learning. A latent space is conditioned on the geometrical structure in the forward path learning and for the inverse path learning an optical response is used as conditional input along with one or more predefined domain features. The forward path learning is used to generate a set of structure-optical response combinations with the limited input of structure-optical response combination. The forward path learning helps to obtain the set of structure-optical response combinations which are not part of obtained samples from the predefined simulator primarily to enable fabrication-feasibility. The forward path learning addresses the limitations in the choice of features to obtain the desired sensitivity. Whereas the inverse path learning as a sensor design generator obtains synthesized sensor design given a target sensor response e.g., synthesis of plasmonic sensor structure given the optical response.

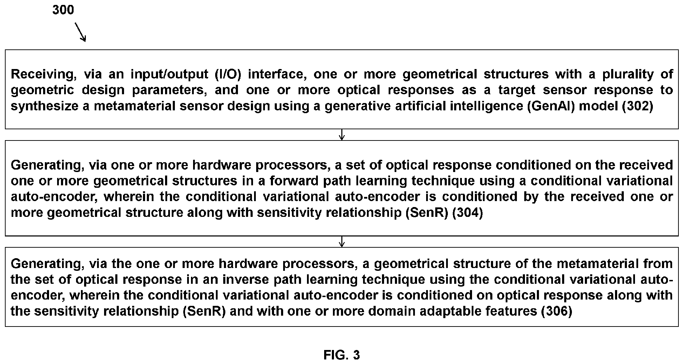

FIG. 3 is a flow diagram illustrating a processor-implemented method 300 for a generative artificial intelligence (GenAI) based sensor design synthesis implemented by the system 100 of FIG. 1, in accordance with an embodiment of the present disclosure. Functions of the components of the system 100 are now explained through steps of flow diagram in FIG. 3, according to some embodiments of the present disclosure.

In the method and system for a generative artificial intelligence (GenAI) based sensor design synthesis of metamaterial. Herein, the GenAI based forward learning path provides unknown information that would immensely be useful for optimizing the design towards the highest sensitivity and easiest fabrication-feasibility. Furthermore, the GenAI based inverse design may provide all possible structures associated with each spectrum which would create a database of all possible.

Initially, at step 302 of the processor-implemented method 300, the one or more hardware processors 108 are configured by the programmed instructions to receive one or more geometrical structures with a plurality of geometric design parameters, and one or more optical response as a target sensor response corresponding to each of the one or more geometrical structures to synthesize a metamaterial sensor design using a generative artificial intelligence (GenAI) model.

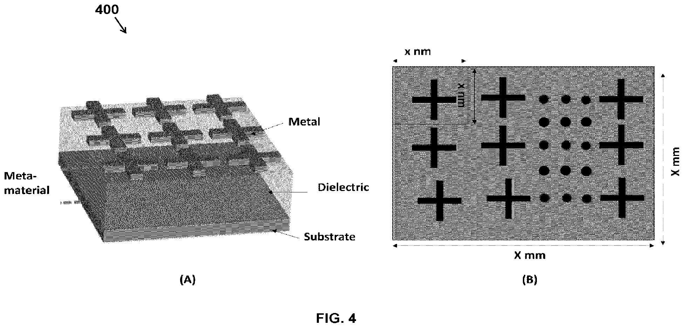

Referring FIG. 4, a schematic diagram 400 of a designed plasmonic metamaterial, according to some embodiments of the present disclosure. A plasmonic metamaterial is simulated from scratch. The metamaterial includes three layers: in bottom there is a metal (silver) layer, on top of that there is a dielectric layer and on top of that a cross-like periodic metallic (silver) nanostructure is placed. The periodically distributed cross-structured unit cells are depicted in the top view of the metamaterial as shown in FIG. 4. The black dots indicate that the metamaterial consists of numbers of unit cells repeatedly present along the x- and y-directions of the structure. The topmost layer, that it, the periodic nanostructure is responsible for the plasmonic effect. When an optical radiation is incident to the nanostructures, at the resonance frequency, the free electrons present on the metal-dielectric interface couple with the photons to form polaritons and propagate as a wave through the surface of the metal which is known as Surface Plasmon Polariton wave, or simply plasmonic wave. By changing the structural features of the nanostructures, the arrangements of the free electrons can be changed that affect the plasmonic response. Also, when the refractive index of the surrounding medium changes, the plasmonic response shifts due to the variations in the photon-electron interactions. This makes the discussed plasmonic metamaterial capable of sensing the refractive index of the surrounding medium.

The proposed design presents a metamaterial with a metal-dielectric-metal structure. There are - one dielectric layer (refractive index 1.75) and one silver substrate below the unit cell, comprising the thicknesses of 12nm and 17nm, respectively. The optical source illuminating the metamaterial from the top is a plane of wavelength range of 600-1200nm, encompassing the visible and near-infrared optical wavelength range. The metamaterial works as an absorber by design and there is no light transmitted, all reflected light is recorded by optical spectrometer in a practical scenario. The top surface of the metamaterial contains unit cells, nano-dimensional unit structures that interact with the photons to generate the plasmonic effect. The simulated unit cell presented in is made of silver, simulations were carried out for varying the unit cell structure by varying its features.

At the next step 304 of the processor-implemented method 300, the one or more hardware processors 108 are configured by the programmed instructions to generate a set of optical response conditioned on the received one or more geometrical structures in a forward path learning technique using a conditional variational auto-encoder. The forward path learning refers to predict an optical response for a predefined geometry of a metamaterial. It generates a set of structure optical response combinations with a limited input of structure-optical response combination.

The conditional variational auto-encoder uses a conditional prior for data synthesis with the forward path learning and the inverse path learning. The conditional prior includes a geometry of sensor, an optical response, and a sensitivity relationship (SenR). The conditional variational auto-encoder is conditioned by the received one or more geometrical structure along with sensitivity relationship (SenR). The sensitivity relationship (SenR) is a function of physical property and geometry, that influences the sensitivity.

$$SenR = f(Phy\ (RI),\ Sensor\{Geometry(Arml, Periodicity, Gap),$$

$$Pol(source), RI\_meta\}) \tag{1}$$

wherein, Phy (RI) refractive index of a physical medium;
Geometrical properties: Arm length (Arml), Periodicity, GAP;
Pol(source) polarization states of the incident light;
RI_meta is refractive index of the material.

Finally, at the last step 306 of the processor-implemented method 300, the one or more hardware processors 108 are configured by the programmed instructions to generate a geometrical structure of the metamaterial from the set of optical response in an inverse path learning technique using the conditional variational auto-encoder. Herein, the conditional variational auto-encoder is conditioned on optical response along with the sensitivity relationship (SenR) and with one or more domain adaptable features. The inverse path learning technique synthesizes the geometrical conditions with respect to the target optical response with a domain (physics guidance) adaptable feature and following SenR during learning.

Further, optimization is followed using a loss function during the forward path learning and the inverse path learning, constraining towards the sensitivity relationship (SenR).

$$Sen\_loss = SenR\ (input\ data)\ -\ SenR(generated\ data) \tag{2}$$

where exemplary SenR is defined as Slope of the straight line, which is obtained using resonance wavelength vs refractive index. Distance between consecutive local minima points (sensitivity of the geometrical structure detection/optical resonance) position in terms of wavelength, and position of the global minima.

The loss function of the generative model comprises Evidence Lower Bound (ELBO) reconstruction and KL loss; $KLloss = KL(N\ (\mu(x),\ \sigma(x)),\ N\ (0,\ I\ )))$ along with the forward path error ($\Delta$F path i.e., difference between the generated optical spectra conditioned on the geometrical structure during forward path learning and the target optical response of the inverse path used as conditional prior to generate the geometrical structure ) and sensitivity loss as regularizer

$$Gen_{Loss} = Reconstruction\ Loss\ +\ KL\ Loss\ +\ \Delta Fpath +\ Sen_{loss} \tag{3}$$

The sensitivity relationship is a function of physical property and geometry that influences sensitivity. Herein, the response of the metamaterial sensor is changing with respect to different geometrical features and with respect to the physical property. For example, plasmonic sensing is popular for its low concentration detectability i.e., enhancing measurement sensitivity with a small sample size. Nano-plasmonic is in its early stage of research having enormous possibilities to impact different applications like energy harvesting, environmental monitoring, radar communication, biomedicine, paint industry (Structural colours) etc. The application map for plasmonic metamaterial sensor synthesis is quite large. Each application needs custom optical response and corresponding meta surface design. The functionality of plasmonic metamaterials is dependent primarily on their structure (geometry).

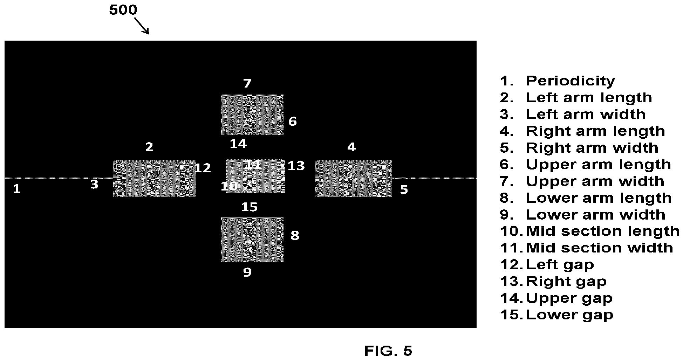

In the proposed design, the cross-like nanostructure is presented in FIG.5 and associated 15 geometrical features are denoted. There are 15 features that have been identified in the unit cell structure which may affect the plasmonic resonance namely: 1) periodicity, 2) left arm length, 3) left arm width, 4) right arm length, 5) right arm width, 6) upper arm length, 7) upper arm width, 8) lower arm length, 9) lower arm width, 10) mid-section length, 11) mid-section width, 12) left gap, 13) right gap, 14) upper gap, 15) lower gap. When the surrounding refractive index of the nanostructure changes, the plasmonic response occurs at a different wavelength. The correlation between the shift in the refractive index ($\Delta RI$) and the corresponding resonance wavelength ($\Delta\lambda$) presents the sensitivity S of the sensor. The variation in the plasmonic resonance wavelength ($\lambda\_res$) corresponding to the refractive indices (RI) is shown:

$$S = \frac{\Delta\lambda}{\Delta RI}\ \ (nm/RIU) \tag{4}$$

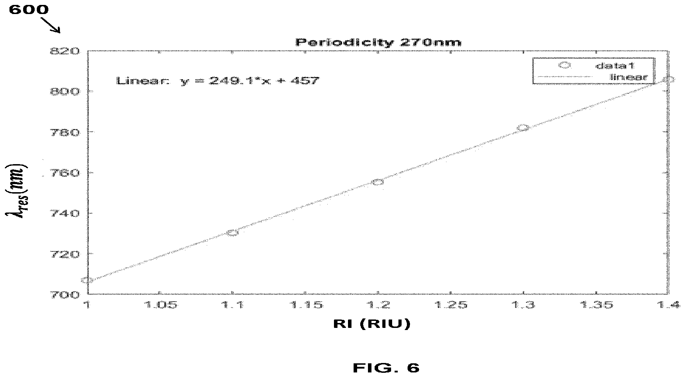

wherein, with different geometrical features, the response of the plasmonic metamaterial to the refractive index changes which in turn influences the sensitivity. The sensitivity is calculated for a range of periodicities as shown in FIG. 6.

The sensitivity of the plasmonic metamaterial sensor for a range of periodicity, functionalized through a refractive index range of 1.0-1.4 RIU as explained in a below table 1.

Table 1

| Periodicity (nm) | S (nm/ RIU) |
|---|---|
| 150 | 249 |
| 170 | 259 |
| 190 | 242 |
| 210 | 259 |
| 230 | 175 |
| 250 | 175 |
| 270 | 249 |
| 290 | 259 |
| 310 | 242 |

The proposed design sensor is optimized and to be used for nano-plastic detection. There are different types of plastic particles that can contaminate water/ waterbodies, for example, hexafluoropropylene oxide, fluorinated ethylene propylene, 2-heptaflurobutoxy ethyl acrylate etc. have refractive indices between 1.3-1.4. Therefore, the current plasmonic metamaterial is useful to detect changes in the refractive indices induced by nano plastic contamination. The key structural feature of the plasmonic metamaterial is periodicity, a variation in which results in sensitivity of the sensor towards nano plastic refractive index.

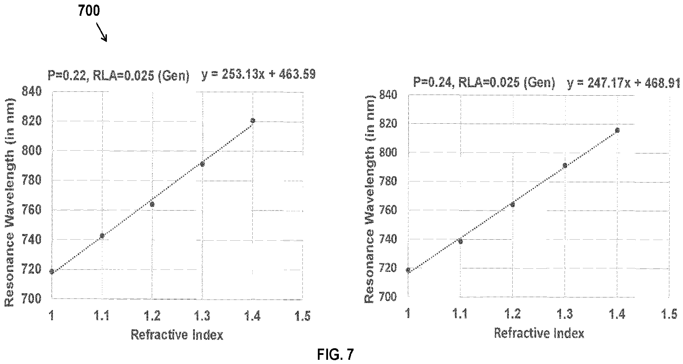

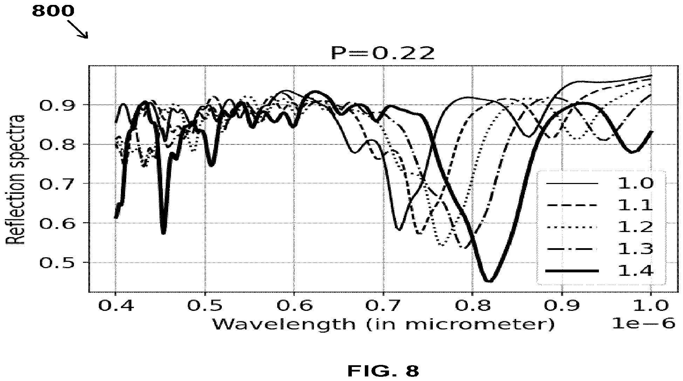

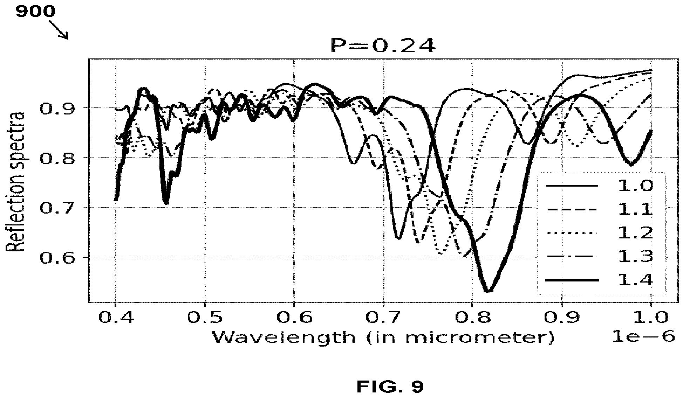

Referring FIG. 7, a schematic diagram to illustrate a generated optical response corresponding to an unseen geometrical structure (Not present in input data during generative learning). For example, structure having periodicity 0.22, 0.24 micrometres shown in FIG. 8 and FIG. 9, following the same relations with the resonance wavelength and refractive index.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of the present disclosure herein address unresolved problems of unavailability of a scalable framework to enable large spectrum of optical response-design combination with reduced computing time. Further, there are limitations in the choice of features to obtain the desired sensitivity. Embodiments herein provide a method and system for a generative artificial intelligence (GenAI) based sensor design synthesis of metamaterial. Herein, the sensor design synthesis framework is based on deep generative models. The GenAI based design synthesis model would provide that unknown information that would immensely be useful for optimizing the design towards the highest sensitivity, addressing the limitations in the choice of features using numerical simulator and easiest fabrication-feasibility following sensitivity response (SenR). The SenR is the sensitivity relationship between the physical properties of the ambient medium and the property of the sensor.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor-implemented method (300) comprising:

   receiving (302), via an input/output (I/O) interface, one or more geometrical structures with a plurality of geometric design parameters, and one or more optical responses as a target sensor response to synthesize a metamaterial sensor design using a generative artificial intelligence (GenAI) model;
   generating (304), via one or more hardware processors, a set of optical response conditioned on the received one or more geometrical structures in a forward path learning technique using a conditional variational auto-encoder, wherein the conditional variational auto-encoder is conditioned by the received one or more geometrical structures along with sensitivity relationship (SenR); and
   generating (306), via the one or more hardware processors, a geometrical structure of the metamaterial from the set of optical response in an inverse path learning technique using the conditional variational auto-encoder, wherein the conditional variational auto-encoder is conditioned on optical response along with the sensitivity relationship (SenR) and with one or more domain adaptable features.

2. The processor-implemented method (300) as claimed in claim 1, wherein the conditional variational auto-encoder uses a conditional prior for data synthesis with the forward path learning and the inverse path learning.

3. The processor-implemented method (300) as claimed in claim 2, wherein the conditional prior includes a geometry of sensor, an optical response, and a sensitivity relationship (SenR).

4. The processor-implemented method (300) as claimed in claim 1,

   wherein the generated geometrical structure of metamaterial is operating through a predefined optical wavelength range;
   wherein the sensitivity relationship is a function of physical property and geometry and influences the sensitivity;
   wherein an optimization is followed using a loss function constraining towards the sensitivity relationship during the forward path learning and the inverse path learning.

5. The processor-implemented method (300) as claimed in claim 1, wherein response of the metamaterial sensor is changing with respect to different geometrical features and with respect to the physical property.

6. A system (100) comprising:

a memory (110) storing instructions;

one or more Input/Output (I/O) interfaces (104); and

one or more hardware processors (108) coupled to the memory (110) via the one or more I/O interfaces (104), wherein the one or more hardware processors (108) are configured by the instructions to:

receive one or more geometrical structures with a plurality of geometric design parameters, and one or more optical responses as a target sensor response to synthesize a metamaterial sensor design using a generative artificial intelligence (GenAI) model;

generate a set of optical response conditioned on the received one or more geometrical structures in a forward path learning technique using a conditional variational auto-encoder, wherein the conditional variational auto-encoder is conditioned by the received one or more geometrical structure along with sensitivity relationship (SenR); and

generate a geometrical structure of the metamaterial from the set of optical response in an inverse path learning technique using the conditional variational auto-encoder, wherein the conditional variational auto-encoder is conditioned on optical response along with the sensitivity relationship (SenR) and with one or more domain adaptable features.

7. The system (100) as claimed in claim 6, wherein the conditional variational auto-encoder uses a conditional prior for data synthesis with the forward path learning and the inverse path learning.

8. The system (100) as claimed in claim 7, wherein the conditional prior includes a geometry of sensor, an optical response, and a sensitivity relationship (SenR).

9. The system (100) as claimed in claim 6,

wherein the generated geometrical structure of metamaterial is operating through a predefined optical wavelength range.

wherein the sensitivity relationship is a function of physical property and geometry and influences the sensitivity.

wherein an optimization is followed using a predefined loss function during the forward path learning and the inverse path learning.

10. The system (100) as claimed in claim 8, wherein response of the metamaterial sensor is changing with respect to different geometrical features and with respect to the physical property.

11. One or more non-transitory machine-readable information storage mediums comprising one or more instructions which when executed by one or more hardware processors cause:

receiving , via an input/output (I/O) interface, one or more geometrical structures with a plurality of geometric design parameters, and one or more optical responses as a target sensor response to synthesize a metamaterial sensor design using a generative artificial intelligence (GenAI) model;

generating , a set of optical response conditioned on the received one or more geometrical structures in a forward path learning technique using a conditional variational auto-encoder, wherein the conditional variational auto-encoder is conditioned by the received one or more geometrical structures along with sensitivity relationship (SenR); and

generating , via the one or more hardware processors, a geometrical structure of the metamaterial from the set of optical response in an inverse path learning technique using the conditional variational auto-encoder, wherein the conditional variational auto-encoder is conditioned on optical response along with the sensitivity relationship (SenR) and with one or more domain adaptable features.

12. The one or more non-transitory machine-readable information storage mediums of claim 11, wherein the conditional variational auto-encoder uses a conditional prior for data synthesis with the forward path learning and the inverse path learning.

13. The one or more non-transitory machine-readable information storage mediums of claim 12, wherein the conditional prior includes a geometry of sensor, an optical response, and a sensitivity relationship (SenR).

14. The one or more non-transitory machine-readable information storage mediums of claim 11,

wherein the generated geometrical structure of metamaterial is operating through a predefined optical wavelength range;
wherein the sensitivity relationship is a function of physical property and geometry and influences the sensitivity; and
wherein an optimization is followed using a loss function constraining towards the sensitivity relationship during the forward path learning and the inverse path learning.

15. The one or more non-transitory machine-readable information storage mediums of claim 11, wherein response of the metamaterial sensor is changing with respect to different geometrical features and with respect to the physical property.

**FIG. 1**

Data consisting of input spectra (S)
and given corresponding Geometry(G)

**Given Geometry**

| Reflection spec | Periodicity (um) | Left Arm Length | Left Arm Width | Right Arm Length | Right Arm Width |
|---|---|---|---|---|---|
| R1 | 0.21 | 0.03 | 0.02 | 0.03 | 0.02 |
| R2 | 0.21 | 0.025 | 0.02 | 0.03 | 0.02 |

**Forward Path**

Forward Training (S|G)

Trained model

Domain related properties

Generated spectra for target geometry

| Reflection spec | Periodicity (um) | Left Arm Length | Left Arm Width | Right Arm Length | Right Arm Width |
|---|---|---|---|---|---|
| R3 | 0.21 | 0.03 | 0.02 | 0.015 | 0.02 |

**Target Geometry**

FIG. 2A

**Data consisting of input geometry (G) and given corresponding spectra(S)**

| Periodicity (μm) | Left Arm Length | Left Arm Width | Right Arm Length | Right Arm Width |
|---|---|---|---|---|
| 0.21 | 0.03 | 0.02 | 0.03 | 0.02 |
| 0.21 | 0.025 | 0.02 | 0.03 | 0.02 |

**Given Spectra**

**Inverse Path**

**Trained model in Forward path**

**Predicted spectra** — **Generated geometry**

**Inverse Training & Synthesis (G|S)**

**Training**

**Domain related properties**

**Target Spectra**

**200**

**Generated geometry for target spectra**

| Periodicity (μm) | Left Arm Length | Left Arm Width | Right Arm Length | Right Arm Width |
|---|---|---|---|---|
| 0.21 | 0.1 | 0.02 | 0.03 | 0.02 |

**FIG. 2B**

300

Receiving, via an input/output (I/O) interface, one or more geometrical structures with a plurality of geometric design parameters, and one or more optical responses as a target sensor response to synthesize a metamaterial sensor design using a generative artificial intelligence (GenAI) model (302)

Generating, via one or more hardware processors, a set of optical response conditioned on the received one or more geometrical structures in a forward path learning technique using a conditional variational auto-encoder, wherein the conditional variational auto-encoder is conditioned by the received one or more geometrical structure along with sensitivity relationship (SenR) (304)

Generating, via the one or more hardware processors, a geometrical structure of the metamaterial from the set of optical response in an inverse path learning technique using the conditional variational auto-encoder, wherein the conditional variational auto-encoder is conditioned on optical response along with the sensitivity relationship (SenR) and with one or more domain adaptable features (306)

FIG. 3

400

Metal

Meta-material

Dielectric

Substrate

(A)

x nm

x nm

X mm

X mm

(B)

FIG. 4

500

1. Periodicity
2. Left arm length
3. Left arm width
4. Right arm length
5. Right arm width
6. Upper arm length
7. Upper arm width
8. Lower arm length
9. Lower arm width
10. Mid section length
11. Mid section width
12. Left gap
13. Right gap
14. Upper gap
15. Lower gap

FIG. 5

FIG. 6

**700**

FIG. 7

FIG. 8

FIG. 9

Europäisches
Patentamt

European
Patent Office

Office européen
des brevets

# EUROPEAN SEARCH REPORT

**Application Number**

EP 25 20 3766

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/373009 A1 (NEOGI ARUP [US] ET AL) 2 December 2021 (2021-12-02) * abstract * * [0041], [0042], [0103], [0105], [0133], [0151], [0152], [0170], [0187], [0197], [0203], [0219]-[0221], [0258], [0268]; figures 1, 3, 9 * | 1-15 | INV. G06F30/17 G06F30/27 ADD. G06F111/14 G06F119/18 |
| A | WEI MA ET AL: "Probabilistic representation and inverse design of metamaterials based on a deep generative model with semi-supervised learning strategy", ARXIV.ORG, CORNELL UNIVERSITY LIBRARY, 201 OLIN LIBRARY CORNELL UNIVERSITY ITHACA, NY 14853, 30 January 2019 (2019-01-30), XP081010128, * abstract * * page 6 - page 22; figures 1-3 * | 1-15 | |
| A | MA WEI ET AL: "Deep-Learning-Enabled On-Demand Design of Chiral Metamaterials", ACS NANO, vol. 12, no. 6, 1 June 2018 (2018-06-01), pages 6326-6334, XP055778363, US ISSN: 1936-0851, DOI: 10.1021/acsnano.8b03569 * abstract * * page 6327 - page 6330; figure 2 * | 1-15 | TECHNICAL FIELDS SEARCHED (IPC) G06F |

-/--

The present search report has been drawn up for all claims

| Place of search | Date of completion of the search | Examiner |
|---|---|---|
| Munich | 5 March 2026 | Brandiska, Pavlina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.............................................................................................

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

**Application Number**

EP 25 20 3766

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SHAN YIN ET AL: "Deep Learning Enabled Design of Terahertz High-Q Metamaterials", ARXIV.ORG, CORNELL UNIVERSITY LIBRARY, 201 OLIN LIBRARY CORNELL UNIVERSITY ITHACA, NY 14853, 21 December 2023 (2023-12-21), XP091669710, * abstract * * section 2.2-2.4; figure 2 * ----- | 1-15 | |

TECHNICAL FIELDS
SEARCHED      (IPC)

The present search report has been drawn up for all claims

| Place of search | Date of completion of the search | Examiner |
|---|---|---|
| Munich | 5 March 2026 | Brandiska, Pavlina |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

...............................................................................................

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 25 20 3766

This annex lists the patent family members relating to the patent documents cited in the above-mentioned European search report.
The members are as contained in the European Patent Office EDP file on
The European Patent Office is in no way liable for these particulars which are merely given for the purpose of information.

05-03-2026

| Patent document cited in search report | Publication date | Patent family member(s) | Publication date |
|---|---|---|---|
| US 2021373009 A1 | 02-12-2021 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202421085898